# EUROPEAN PATENT APPLICATION

(11) **EP 2 389 019 A2**
(43) Date of publication of application: **23.11.2011**
(21) Application number: 11002694.5
(22) Date of filing: 31.03.2011
(51) Int. Cl.: H04W 4/06, H04L 5/00

(54) **Method for realizing MBMS under bandwidth aggregation, CoMP and relay operation**

(30) Priority: 31.03.2010 US 319275 P; 31.03.2011 US 76425
(71) Applicant: HTC Corporation, Taoyuan County 330 (TW)
(72) Inventor: Yu-Chih, Jen, Taoyuan City Taoyuan County 330 (TW)
(74) Representative: Schmidbauer, Andreas Konrad

(57) **Abstract**

Method for realizing MBMS under bandwidth aggregation, CoMP and relay operation includes allowing a first cell in an MBSFN area to transmit data on a physical downlink data channel in a first subframe while a second cell in the MBSFN area transmitting MBMS data on a physical multicast channel in a second subframe; wherein the first cell operates in a first wireless communication system and the second cell operates in a second wireless communication system; wherein the first wireless communication system is as same as the second wireless communication system, or the first wireless communication system is different from the second wireless communication system.

## Description

This application claims the benefit of U.S. Provisional Application No. 61/319,275, filed on Mar. 31, 2010 and entitled "Method and Apparatus to realize MBMS under bandwidth aggregation, CoMP and relay operation", the contents of which are incorporated herein by reference.

### Background of the Invention

### 1. Field of the Invention

The present invention relates to a method for realizing multimedia broadcast multicast service (MBMS), and more particularly, to a method for realizing MBMS under bandwidth aggregation, Coordinated Multipoint Transmission (CoMP) operation and relay operation.

### 2. Description of the Prior Art

To enhance multimedia performance of the 3G mobile telecommunications system, the 3rd Generation Partnership Project (3GPP) introduces a Multimedia Broadcast Multicast Service (MBMS), which is a point-to-multipoint bearer service established on a long-term evolution (LTE) system. MBMS allows a single source terminal to simultaneously transmit data to multiple user equipments (UEs) via Internet Protocol (IP) packets.

The MBMS introduces a single frequency network (SFN) operation for MBMS transmission, i.e. MBMS Single Frequency Network (MBSFN), to reduce service interruption due to frequency switching during transmissions. In MBSFN, single frequency is used by multiple cells to perform synchronized transmission at the same time, so as to save frequency resources and enhance spectrum utilization. An area covered by an MBSFN is called an MBSFN area.

In an Evolved Universal Mobile Telecommunications System ((UMTS) Terrstrial Radio Access Network (E-UTRAN), Multimedia Broadcast Multicast Service (MBMS) can be provided on a frequency layer dedicated to MBMS (set of cells dedicated to MBMS transmission i.e. set of "MBMS dedicated cells") and/or on a frequency layer shared with non-MBMS services (set of cells supporting both unicast and MBMS transmissions i.e. set of "Unicast/MBMS mixed cells"). In both cases, single frequency network mode of operation is possible for MBMS transmission (MBSFN). MBMS reception is possible for UEs in RRC_CONNECTED or RRC_IDLE states. Whenever receiving MBMS services, a user shall be notified of an incoming call, and originating calls shall be possible.

In an MBSFN subframe, the dynamic control signalling (PDCCH and/or PHICH) shall not occupy more than two OFDM symbols. The PDCCH is used only for uplink resource grants and not for the PMCH, as the scheduling of MBSFN data on the PMCH is carried out by higher-layer signalling. The pattern of reference symbols embedded in the PMCH is different from that in the PDSCH; however, that the common reference symbol pattern embedded in the OFDM symbols carrying control signalling at the start of each subframe remains the same as in the non-MBSFN subframes. The extended cyclic prefix (CP) is always used for data region of the MBSFN subframe.

In addition, only two logical channels are defined in MBMS to support point-to-multipoint (p-t-m) downlink transmission: Multicast Control Channel (MCCH) and Multicast Traffic Channel (MTCH). MCCH is utilized for transmitting control messages of all MBMS services in an MBSFN area, and MTCH is utilized for transmitting session data of an MBMS service. The session data relates to contents of the MBMS service. Both MCCH and MTCH are mapped to a transmission channel newly defined by MBMS, i.e. Multicast Channel (MCH).

However, for the MBSFN operations, there are still some issues have not been discussed. The issues are described as follows.

Issue 1:

The channel in MBSFN operation is, in effect, as a composite channel from multiple cells. Therefore, it is necessary for the UE to estimate separate channels for MBSFN reception. Consequently, in order to avoid the need to mix normal reference symbols and MBSFN reference symbols in the same subframe, frequency-division multiplexing of the PMCH and PDSCH is not permitted within the same subframe, which limits the flexibility for MBSFN operation and normal operation within an area where normal cells and MBMS cells locates and there is at least one MBSFN.

Issue 2:

Coordinated Multipoint Transmission (CoMP) operating set is designed for multi-cell unicast transmission. For MBSFN dedicated carrier cell, there would be no uplink transmission being allowed. Thus, it is impossible or difficult for the network to receive useful channel information so as to improve transmission performance, especially when the UE is nearby the edge of the cell.

Issue 3:

In long term evolved (LTE) system, 6ms for downlink and 7ms for uplink are defined and fixed for measurement gap. However, with Relay deployment, there may be no such continuous uplink/downlink transmission period due to inband relaying and the measurement gap for measurement gap may differ and may not comply with the defintion.

Issue 4:

Cells under a MBSFN area normally share the same component carrier for MBSFN transmissions. Due to different channel condition and future carrier aggregation support, coherent bandwidth or channel delay spread might be slight different than assumption or among UEs. However, currently, the MBSFN reference signal is implicitly know by the UE only according to the MBSFN area ID.

On the other hand, currently, it is required to perform transmission in the synchronous manner where all cells under the same MBSFN area shall transmit the same MBMS data for transmit diversity with the same transmission criteria (including MCS, transmission resource, etc) to all UEs receiving MBMS service. However, each UE may experience different SNR/received power and with different capability and requirement.

In addition, MBMS configuration and deployment by location-based manner was not taken into account for MBMS data transmission and reference signal transmission.

Issue 5:

MBSFN subframes related to a MCCH are configured at a component carrier in system information and MCCH. For carrier aggregation case, a cell could support more than one MBSFN area on more than one component carrier respectively. Since configuration of carrier aggregation is UE specific, how UE retrieves system information and MCCH should be designed.

In addition, since asymmetric downlink/uplink component carrier aggregation, how network indicates which component carrier (CC) (e.g. all CCs or part of CCs) where MBSFN subframe can be mapped with PDCCH for PDSCH transmission should be designed and where (which CC) feedback corresponding to either PDSCH or PMCH in a MBSFN subframe should be sent.

On the other hand, since a carrier might not be a standalone carrier, there is no system information to indicate MCCH on the carrier or there is even no MCCH on the carrier. How to provide MCCH indication and MCCH information for the carrier should be designed.

Issue 6:

Dedicated MBMS service is transmitted on dedicated carriers/band so that there should be no need to signal LCID along with the MBMS data transmission since it is known implicitly.

On the other hand, the cyclic prefix (CP) used for CoMP PDSCH transmission in MBSFN subframes is not considered for both control region and data region in MBSFN subframe (normally according to system configured CP type for control region) so that the reception may suffer due to the synchronization problem if CP used by each cell in CoMP is simply based on system configured CP.

### Summary of the Invention

The present invention further provides a method for realizing MBMS under bandwidth aggregation. The method comprises a UE in a cell within at least one MBSFN area expecting at least one or different MBSFN reference signals from at least one or different transmission points or cells for MBMS or MBSFN transmission from the same MBSFN area or different MBSFN areas.

The present invention further provides a method for realizing MBMS under bandwidth aggregation. The method comprises a cell in an MBSFN area stopping transmitting at least one MBMS service which is transmitted by another cell or other cells in the MBSFN area.

The present invention further provides a method for realizing MBMS under bandwidth aggregation. The method comprises when MBMS service is transmitted with a dedicated component carrier, band or channel, no LCID being signaled along with the MBMS data transmission.

The present invention further provides a method for realizing MBMS under CoMP operation. The method comprises for a UE configured with CoMP operation, the UE detecting at least one PDCCH from at least one cell by using system configured cyclic prefix (CP) type of each cell of the at least one cell.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a flowchart illustrating a process for realizing MBMS according to a first embodiment of the present invention.

FIG. 2 is a flowchart illustrating a process for realizing MBMS according to a second embodiment of the present invention.

FIG. 3 is a flowchart illustrating a process for realizing MBMS according to a third embodiment of the present invention.

FIG. 4 is a flowchart illustrating a process for realizing MBMS according to a fourth embodiment of the present invention.

FIG. 5 is a flowchart illustrating a process for realizing MBMS according to a fifth embodiment of the present invention.

FIG. 6 is a flowchart illustrating a process for realizing MBMS according to a sixth embodiment of the present invention.

FIG. 7 is a flowchart illustrating a process for realizing MBMS according to a seventh embodiment of the present invention.

FIG. 8 is a flowchart illustrating a process for realizing MBMS according to an eighth embodiment of the present invention.

FIG. 9 is a flowchart illustrating a process for realizing MBMS according to a ninth embodiment of the present invention.

FIG. 10 is a flowchart illustrating a process for realizing MBMS according to a tenth embodiment of the present invention.

FIG. 11 is a flowchart illustrating a process for realizing MBMS according to an eleventh embodiment of the present invention.

FIG. 12 is a flowchart illustrating a process for realizing MBMS according to a twelfth embodiment of the present invention.

FIG. 13 is a flowchart illustrating a process for realizing MBMS according to a thirteenth embodiment of the present invention.

FIG. 14 is a flowchart illustrating a process for realizing MBMS according to a fourteenth embodiment of the present invention.

FIG. 15 is a flowchart illustrating a process for realizing MBMS according to a fifteenth embodiment of the present invention.

FIG. 16 is a flowchart illustrating a process for realizing MBMS according to a sixteenth embodiment of the present invention.

FIG. 17 is a flowchart illustrating a process for realizing MBMS according to a seventeenth embodiment of the present invention.

FIG. 18 is a flowchart illustrating a process for realizing MBMS according to an eighteenth embodiment of the present invention.

### Detailed Description

For solving issue 1, the present invention provides some concepts. First, it should be considered that whether all cells in MBSFN should stop transmitting MBMS in the MBSFN subframe or part of cells stops MBMS for PDSCH while the rest cells are still transmitting MBMS service.

Second, whether normal reference signal could be mixed, or multiplexed with MBSFN reference signal, should also be considered. For PDSCH in an MBSFN subframe is adopted normally when there is no MBMS session ongoing on a MCH. However, a MCCH configured through system information block 2 (SIB2) on broadcast control channel (BCCH) could indicate more than one MCH. Other MCHs may still have sessions ongoing when the current one (scheduling by MSAP on MCCH and DSI) stops, e.g. UE currently only monitoring one MCH does not know about DSI for other MCH(s). On the other hand, if a cell supports more than one MBSFN, then MBMS sessions indicated by MCCH and DSI for a MCH could be stopped when sessions on a MCH of another MBSFN is still running. To allow scheduling flexibility and radio resource efficiency, normal reference signal should be mixed or multiplexed with MBSFN reference signal.

Otherwise, we should only allow MBSFN reference signal (designed for multi-cell reception/transmission) to be used in data region, e.g. stops transmissions of MCH) even PDSCH is transmitted to have accurate channel estimation, especially for the similar cases, such as CoMP operation, e.g. multi-cell transmission as MBSFN.

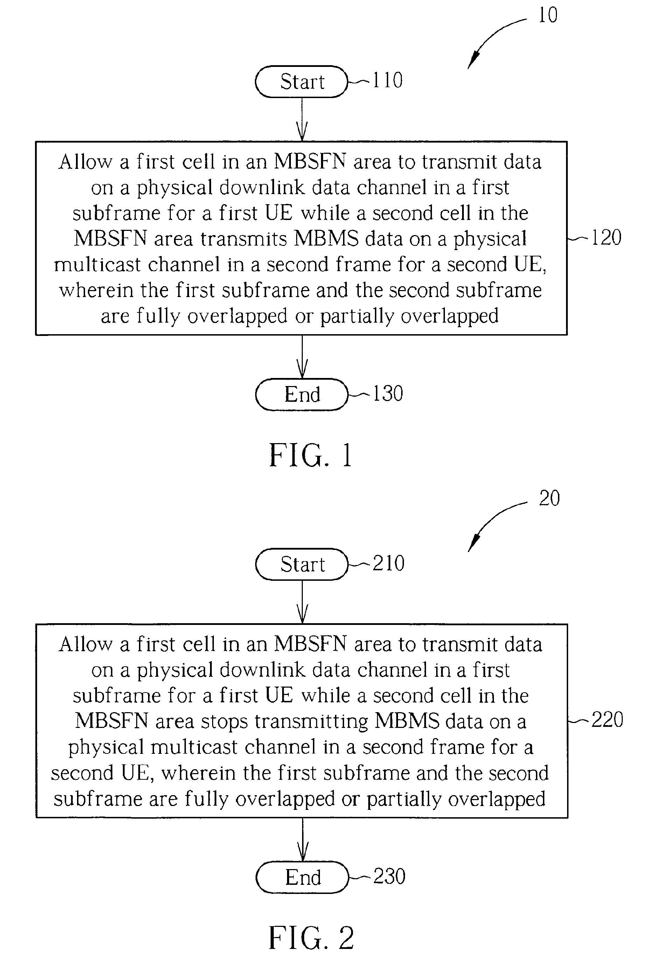

FIG. 1 is a flowchart illustrating a process 10 for realizing MBMS according to a first embodiment of the present invention as a first solution for issue 1. The steps of the process 10 are described as follows:

Step 110: Start;

Step 120: A first cell in an MBSFN area transmits data on a physical downlink data channel in a first subframe for a first UE while a second cell in the MBSFN area transmits data on a physical multicast channel in a second frame for a second UE, wherein the first subframe and the second subframe are fully overlapped or partially overlapped;

Step 130: End.

In the process 10, the first cell and the second cell can operate in the same wireless communication system or different wireless communication systems, e.g. LTE-A and LTE systems. The first subframe can be an MBSFN subframe or a normal subframe, the second subframe can be an MBSFN subframe or a normal subframe, the physical downlink data channel can be PDSCH, the physical multicast channel can be PMCH or MCCH, and the physical downlink data channel and the physical multicast channel are frequency-division multiplexed, wherein the physical downlink data channel and the physical multicast channel are on the same frequency carrier or on different frequency carriers.

The first cell transmits data on the physical downlink data channel means the first cell transmits at least a normal reference symbol and data control channel information, e.g. PDCCH, and the second cell transmits data on the physical multicast channel means the second cell transmits at least an MBSFN reference symbol. Besides, the data on the physical multicast channel can be MBMS data, UE specific data, or broadcast data.

In such case, the normal reference symbol and the MBSFN reference symbol can be frequency-division multiplexed, interleaved, code-division multiplexed, or mixed in the radio resource. Since the physical downlink data channel and the physical multicast channel are frequency-division multiplexed, and the normal reference symbol and the MBSFN reference symbol are frequency-division multiplexed, interleaved, code-division multiplexed, or mixed in the radio resource, the first UE can monitor/measure/detect the normal reference symbol from the first cell and the MBSFN reference symbol from the second cell, and besides, the first UE also monitors the data control channel information, e.g. PDCCH, from the first cell, and/or MBMS control channel information, e.g. MCCH, MSAP, or DSI, from the second cell (or the first cell). In other words, the first UE receives data on the physical downlink data channel and MBMS data on the physical multicast channel. That is, the first UE can receives the MBMS service, e.g. MBMS control information, MBSFN reference symbol, or PMCH, according to the system information in the first cell, and does not need to know which cell the second cell actually is (the second cell can be a neighboring cell in the same MBSFN area or the first cell) or the first UE recognizes the second cell. In such case, the first UE can be configured with CoMP operation or MIMO operation.

However, if the data control channel information intended for the first UE is detected by the first UE, or if the first subframe is configured for data control channel information known by the first UE, the UE only monitors/measures/detects the normal reference symbol from the first cell.

On another aspect, by the operation principle (physical downlink data channel and the physical multicast channel are frequency-division multiplexed), the second cell can also transmit data on the physical downlink data channel in its cell to the second UE in the second subframe.

FIG. 2 is a flowchart illustrating a process 20 for realizing MBMS according to a second embodiment of the present invention as a second solution for issue 1. The steps are described as follows.

Step 210: Start;

Step 220: A first cell in an MBSFN area transmits data on a physical downlink data channel in a first subframe for a first UE while a second cell in the MBSFN area stops transmitting data on a physical multicast channel in a second subframe for a second UE, wherein the first subframe and the second subframe are fully overlapped or partially overlapped;

Step 230: End.

In the process 20, the first cell and the second cell can operate in the same wireless communication system or different wireless communication systems, e.g. LTE-A and LTE systems. The cells in the MBSFN area pre-schedule the physical downlink data channel transmission in an MBSFN subframe, and at least a normal reference symbol from the first cell and at least an MBSFN reference symbol from the second cell are frequency-division multiplexed, interleaved, code-division multiplexed, or mixed in radio resource. However, if the first subframe is configured as an MBSFN subframe, the first cell stops transmitting data on the physical multicast channel in the first subframe. The data on the physical downlink data channel is for the first UE and the first UE monitors at an MBSFN reference symbol for an MBSFN subframe. If the first UE detects physical data control channel intended to the first UE in the first subframe, the first UE considers no MBMS data transmitted in the first subframe. Besides, the data on the physical multicast channel can be MBMS data, UE specific data, or broadcast data.

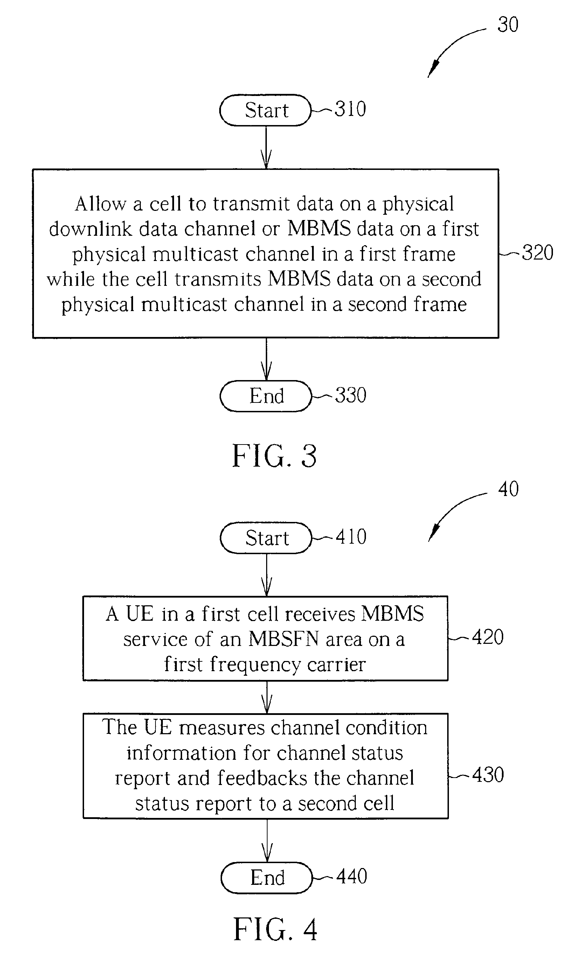

FIG. 3 is a flowchart illustrating a process 30 for realizing MBMS according to a second embodiment of the present invention as a third solution for issue 1. The steps are described as follows.

Step 310: Start;

Step 320: A cell transmits data on a physical downlink data channel or data on a first physical multicast channel in a first frame while the cell transmits data on a second physical multicast channel in a second frame;

Step 330: End.

In the process 30, the cell operates in an OFDM/OFDMA wireless communication system, and the first subframe and the second subframe can be the same MBSFN subframe or different MBSFN subframes. Besides, the first subframe and the second subframe can be fully overlapped, partially overlapped, or non-overlapped. In the first subframe, if the cell transmits data on the physical downlink data channel for a first UE in the first subframe, the cell stops transmission of the data on the first physical multicast channel in the first subframe. If the cell transmits the data on the physical downlink data channel in the first frame and transmits the data on the second physical multicast channel in the second subframe, the normal reference symbol in the data on the physical downlink channel in the first frame and the MBSFN reference symbol in the data on the second physical multicast downlink channel in the second subframe are frequency-division multiplexed, interleaved, code-division multiplexed, or mixed in the radio resource. If the cell transmits the data on the first physical multicast downlink channel in the first subframe and transmits the MBSFN data on the second physical multicast downlink channel in the second subframe, the MBSFN reference symbol in the data on the first physical multicast downlink channel and the MBSFN reference symbol in the data on the second physical multicast downlink channel are frequency-division multiplexed, interleaved, code-division multiplexed, or mixed in the radio resource. In the later case, the first physical multicast downlink channel and the second physical multicast downlink channel are in the same MBSFN area or in different MBSFN areas. The first UE monitors, measures, or detects normal reference symbol, and the MBSFN reference symbols in the data on the first and the second physical multicast downlink channels, and the first UE only receives data on the physical downlink data channel, or receives the data on the physical downlink data and the data on the first and the second physical multicast channels. Besides, the first physical multicast downlink channel and the second physical multicast downlink channel operate on the same frequency carrier or on different frequency carriers, the data consist of MBMS session(s) indicated by MCCH and/or MSAP and/or DSI, and the first UE is configured with CoMP operation or MIMO operation. In addition, the data on the first and the second physical multicast channels can be MBMS data, UE specific data, or broadcast data.

For solving issue 2, the present invention further provides some concepts. First, it should be considered that MBSFN dedicated carrier cells should involve with one cell, e.g. such as donor cell which may or may not provide MBMS service, with MBSFN/unicast mixed carrier (or unicast carrier only) or one specific cell with MBSFN dedicated carrier as one of the carriers of aggregation to collect uplink feedback or uplink transmissions for emergency or other purpose, which may result in that UE under somewhat (RRC) idle-like mode with MBSFN dedicated carrier cells while could be under (RRC) connected mode with the specific cell.

For example, a cell with carrier aggregation could support MBSFN dedicated carrier while consisting of other carriers not dedicated for MBSFN service (mixed carrier or unicast carrier) and/or could be operate stand alone for uplink transmission, such as MBMS feedback.

On the other hand, MBSFN mixed carrier operation shares the same component carrier among cells and its configured semi-static or dynamic. Therefore, the component carrier (CC) for MBSFN service must have system information be transmitted (stand alone) or as an extension carrier of a stand-alone CC which transmits system information (BCH).

FIG. 4 is a flowchart illustrating a process 40 for realizing MBMS according to a fourth embodiment of the present invention as a first solution for issue 2. The steps are described as follows.

Step 410: Start;

Step 420: A UE in a first cell receives MBMS service of an MBSFN area on a first frequency carrier;

Step 430: The UE measures channel condition information for channel status report and feedbacks the channel status report to a second cell;

Step 440: End.

The first cell operates on at least the first frequency carrier (or bandwidth), or the first frequency carrier can be one of the aggregated carriers for carrier aggregation operation (e.g. for the UE) in the first cell, or the first cell does not operate on the first frequency carrier (e.g. UE is under coverage of the first cell and receives MBMS services of an MBSFN area on the first frequency carrier from neighboring cell while the information related to the first frequency carrier for MBMS is provided to the UE in the system information of the first cell), or the first cell operates on unicast carrier and/or MBSFN/unicast mixed carrier.

The second cell operates on at least a unicast carrier, and/or MBSFN/unicast mixed carrier, and/or MBSFN dedicated carrier, and is in the same MBSFN area as the first cell, or is in a different MBSFN area. The second cell makes use of the received channel status report to coordinate/adjust MBMS transmission, wherein the coordination can involve negotiation/communication with at least one cell (e.g. multiple cells) in the said MBSFN area or through an information element (IE), e.g. MME or MBMS control element.

The first frequency carrier can be the MBSFN dedicated carrier, the MBSFN/unicast mixed carrier. The aggregated carriers can be all MBSFN dedicated carriers, or can consist of MBSFN dedicated carrier(s) and/or MBSFN/unicast carrier(s) and/or unicast carrier(s).

In addition, the first cell and the second cell can be the same cell or different cells, and may or may not transmit MBMS service. That is, if the first cell is the second cell, the first cell does not transmit MBMS services, and if the first cell and the second cell are different cells, the second cell does not transmit MBMS services.

In step 430, the channel status report comprises channel condition information. The channel condition information can comprise unicast channel condition and/or MBMS channel condition (e.g. composite channel condition). The purpose of the channel status report is for MBMS transmission and/or emergency purpose and/or for unicast transmission and/or positioning service.

In the process 40, the UE can be a relay (e.g. backhaul link), and can be configured with CoMP operation. If UE is seen as a relay, the UE receives control signaling and/or data transmission and/or MBMS service in the MBSFN subframe. The UE can maintain (RRC) idle-like mode for the first frequency carrier to receive MBMS service from MBSFN dedicated carrier cell(s) in the MBSFN area, while simultaneously maintain (RRC) connected mode for additional carrier with RRC connection link to the second cell or the first cell.

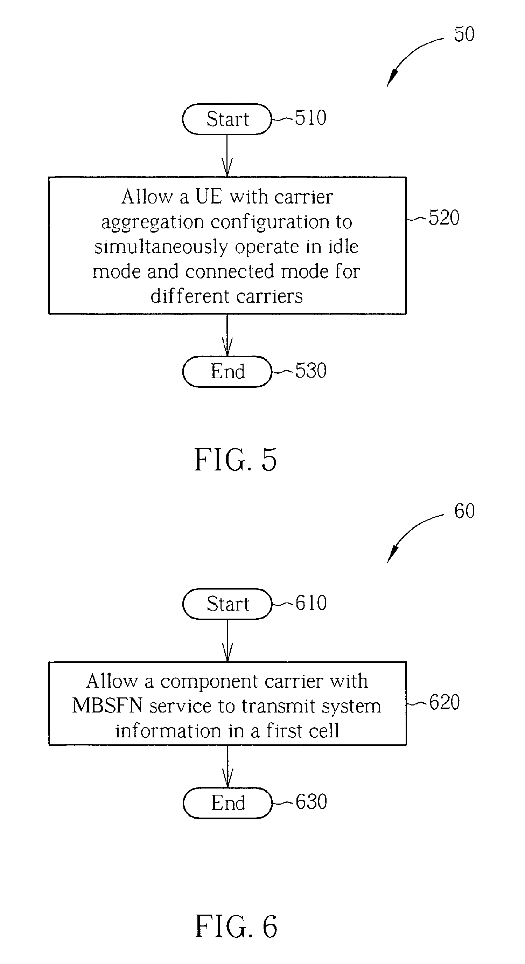

FIG. 5 is a flowchart illustrating a process 50 for realizing MBMS according to a fifth embodiment of the present invention as a second solution for issue 2. The steps are described as follows.

Step 510: Start;

Step 520: A UE with carrier aggregation configuration simultaneously operates in idle mode and connected mode for different carriers;

Step 530: End.

In the process 50, the carrier aggregation can be interpreted as bandwidth extension, and different carriers belong to a same cell or different cells. The idle mode can be, e.g. RRC-idle mode, and the connected mode can be, e.g. RRC-connected mode to maintain connected mode radio bearer. The UE operates in the idle mode for at least a first carrier in the carrier aggregation, wherein the first carrier is an MBSFN dedicated carrier when, for example, UE only receives MBMS service in the MBSFN subframe, or the first carrier is an MBSFN/unicast mixed carrier or a unicast carrier when, for example, the UE receives MBMS service, paging and/or system information update. The UE operates in the connected mode for a least a second carrier, wherein the second carrier is a unicast carrier or an MBSFN/unicast mixed carrier. In addition, the UE can be a relay or a user equipment when the UE operates in the connected mode for the at least second carrier.

FIG. 6 is a flowchart illustrating a process 60 for realizing MBMS according to a sixth embodiment of the present invention as a third solution for issue 2. The steps are described as follows.

Step 610: Start;

Step 620: A component carrier with MBSFN service to transmit system information in a first cell;

Step 630: End.

In the process 60, the component carrier can be, for example, an MBSFN/unicast mixed carrier, an MBSFN dedicated carrier, a stand-alone carrier, or as an extension carrier of a stand-alone component carrier which transmits system information (BCH), and is configured semi-statically or dynamically. If the component carrier in step 620 is an MBSFN/unicast mixed carrier, the component carrier is shared among cells in at least an MBSFN area (the first cell is in the MBSFN area). In other words, an MBSFN/unicast mixed carrier operation or an MBSFN dedicated carrier operation shares a same component carrier or a group of component carriers among cells in at least an MBSFN area. Besides, a UE, in the first cell, utilizing the component carrier, is configured with carrier aggregation or bandwidth extension, and the first cell and the cells in the MBSFN area are configured to operate the same component carrier(s) for MBSFN service, or configure the same component carrier(s) for MBSFN service, wherein the component carriers can further be grouped according MBMS service, physical multicast channels, cell IDs, tracking area IDs, or cell specific configurations.

For solving issue 3, the present invention provides some concepts. First, the present invention allows shorter /dynamic measurement gap. Otherwise, the UE should not perform measurement during fake MBSFN subframe, or the UE only expects/monitors downlink during fake MBSFN only if measurement gap is configured. Generally, UE shall measure only the connection from eNB (UE expects/monitors downlink only during fake MBSFN only if measurement gap is configured), or only the connection from Relay (only non-FAKE NBSFN for relay), or both connections (non-fake MBSFN for relay and fake MBSFN for eNB and report both if relay is non-transparent).

On the other hand, for band swapping mechanism (e.g. steal downlink resource for uplink transmission or steal uplink resource for downlink transmission), it is better to steal downlink resource for uplink transmission (e.g. when UE is using uplink band for uplink transmission, the relay use the downlink band for uplink transmission at the same time to avoid interference) since it is more sufficient than limited uplink resource.

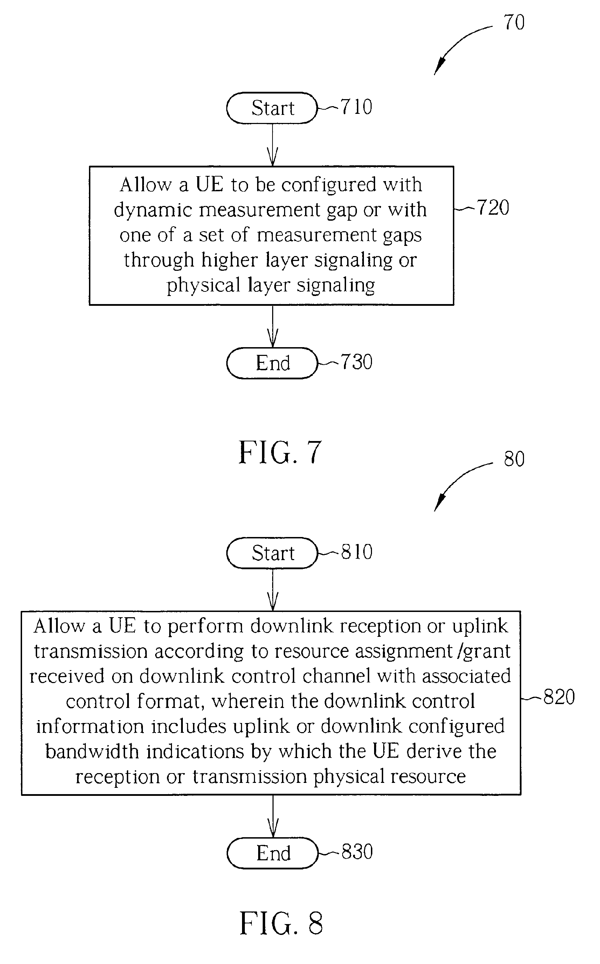

FIG. 7 is a flowchart illustrating a process 70 for realizing MBMS according to a seventh embodiment of the present invention as a first solution for issue 3. The steps are described as follows.

Step 710: Start;

Step 720: A UE is configured with dynamic measurement gap or with one of a set of measurement gaps through higher layer signaling or physical layer signaling;

Step 730: End.

In the process 70, the configuration of the measurement gap for the UE can be indicated by an index or an indication field to a set of measurement gaps, the higher layer signaling can be, for example, RRC signaling or MAC signaling from a base station, a relay node, or a network element. The UE only measures/monitors downlink during MBSFN subframe (e.g. fake MBSFN subframe) only if the measurement gap is configured, and performs measurement with the configured measurement gap length not including MBSFN subframe (e.g. fake MBSFN subframe) For example, if the configured measurement length is n, then the UE should perform measurement for n subframes (e.g. normal subframes) other than (e.g. by skipping) MBSFN subframes (e.g. fake MBSFN subframes). Or, the UE performs measurement with configured measurement gap length not including MBSFN subframes (e.g. fake MBSFN subframes) but up to the last normal subframe within the intended SFN (e.g. not crossing SFN). After the measurement result is obtained by the UE, the UE sends the measurement result to the network. Then the network performs downlink transmissions to the UE on a physical channel according to the received measurement report. Oppositely, if the measurement gap is configured, the UE should not perform measurement during at least one MBSFN subframe (e.g. fake MBSFN subframe) within the configured measurement gap or if any measurement gap is configured for the UE, or the UE does not perform measurement during the at least one MBSFN subframe according to the configured measurement gap.

Alternatively, the UE performs measurement with configured measurement gap length only on MBSFN subframes (e.g. fake MBSFN subframes) by counting the number of measured MBSFN subframes (e.g. until the number of measured MBSFN subframes equals to the configured measurement gap length). Or, the UE performs measurement only on MBSFN subframes (e.g. fake MBSFN subframes) subframes for at most configured measurement gap length number of MBSFN subframes within the intended SFN. In other words, the UE only measures or monitors downlink during at least one MBSFN subframe within the configured measurement gap or if any measurement gap is configured for the UE, or the UE only measures or monitors downlink during the at least MBSFN subframe according to the configured measurement gap. After the measurement result is obtained by the UE, the UE sends the measurement result to the network. Then the network performs downlink transmissions to the UE on a physical channel according to the received measurement report.

Furthermore, alternatively, if the measurement gap for the UE is configured by a base station, a relay node, or a network element, the UE performs measurement only on MBSFN subframes (e.g. fake MBSFN subframes) and non-MBSFN subframes (e.g. normal subframes). The UE separately measures the non-MBSFN subframes (e.g. normal subframes) for, e.g. relay access link, and measures the MBSFN subframes (e.g. fake MBSFN subframes) for, e.g. relay backhaul link to obtain separate measurement results. Then the UE reports the separate measurement results to the network within the same measurement report or different measurement reports. Then the network performs downlink transmissions to the UE on a physical channel according to the received measurement report.

FIG. 8 is a flowchart illustrating a process 80 for realizing MBMS according to an eighth embodiment of the present invention as a second solution for issue 3. The steps are described as follows.

Step 810: Start;

Step 820: A UE performs downlink reception or uplink transmission according to resource assignment/grant received on downlink control channel with associated control format, wherein the downlink control information received on the downlink control channel includes uplink or downlink configured frequency resource indications by which the UE derive the reception or transmission physical resource;

Step 830: End.

In the process 80, if the UE receives resource assignment for downlink reception, the UE derives reception channel resource on either configured downlink or uplink carrier(s)/frequency band(s) according to the said downlink or uplink configured bandwidth indication(s) (e.g. the UE can receive downlink transmission from network on downlink or uplink carrier(s)/frequency band(s)).

In the process 80, if the UE receives resource grant for uplink transmission, the UE derives transmission channel resource on either configured downlink or uplink carrier(s)/frequency band(s) according to the said downlink or downlink configured bandwidth indication(s) (e.g. the UE can transmit UL transmission to network on DL or UL carner(s)/frequency band(s)).

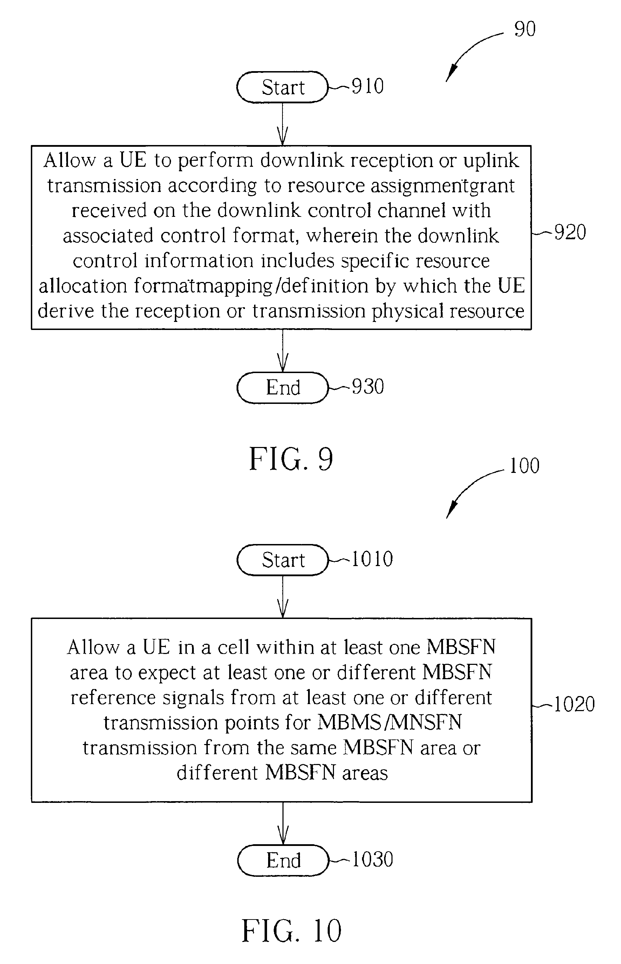

FIG. 9 is a flowchart illustrating a process 90 for realizing MBMS according to a ninth embodiment of the present invention as a third solution for issue 3. The steps are described as follows.

Step 910: Start;

Step 920: A UE to perform downlink reception or uplink transmission according to resource assignment/grant received on the downlink control channel with associated control format, wherein the downlink control information received on the downlink control channel includes specific resource allocation format/mapping/definition by which the UE derive the reception or transmission physical resource.

Step 930: End.

In the process 90, if the UE receives resource assignment for downlink reception, the UE derives reception channel resource on either configured downlink or uplinkcarrier(s)/frequency band(s) according to the said specific resource allocation format/mapping/definition. For example, the UE can receive the downlink transmission rom the network on the downlink or uplink carrier(s)/frequency band(s).

Furthermore, if the UE receives resource grant for uplink transmission, the UE derives transmission channel resource on either configured downlink or uplink carrier(s)/frequency band(s) according to the said specific resource allocation format/mapping/definition. For example, the UE can transit the uplink transmission to the network on the downlink or the uplink carrier(s)/frequency band(s)).

For solving issue 4, the present invention allows different MBSFN reference signals for better channel estimation, wherein it requires pre-understanding of different reference signal patterns at UE.

Besides, the present invention also considers that there might be at least one cell among cells under the same MBSFN area not transmit certain MBMS services (e.g. indicated by MCCH and/or MSAP and/or DSI) in the location-based manner (e.g. some services shall not be provided within certain cell(s) (area) or there is no user in that cell receiving MBMS service). Since some services are still allowed and also available in other cells under the same MBSFN area, they still can be transmitted in the diversity manner.

In addition, for those location-based MBSFN services not being transmitted under the same MBSFN area, whether their reference signal should still be transmitted/measured shall also be considered.

FIG. 10 is a flowchart illustrating a process 100 for realizing MBMS according to a tenth embodiment of the present invention as a first solution for issue 4. The steps are described as follows.

Step 1010: Start;

Step 1020: A UE in a cell within at least one MBSFN area expects at least one or different MBSFN reference signals from at least one or different transmission points or cells for MBMS/MBSFN transmission from the same MBSFN area or different MBSFN areas.

Step 1030: End.

In the process 100, the UE receive MBMS service or data service on MBSFN subframe(s) in the cell, the at least one or different MBSFN reference signals can be, for example, patterns or densities, and the transmission points can be, for example, cells. According to the component carrier and/or MBSFN area ID and/or cell ID and/or UE (e.g. by UE specific reference signal) and/or channel condition (e.g. measurement report) and/or CFI value (e.g. control format indicator) and/or MBSFN subframe, the UE can derive the MBSFN reference signal patterns and/or densities. To obtain the measurement result, the UE performs the measurement before receiving data in an MBSFN subframe, and the data in the MBSFN subframe is MBMS data for MBMS service or UE data for data service.

In addition, different MBSFN reference signals can be sent on the same component carrier/frequency band or different component carriers/frequency bands.

In addition, in the cell, the at least one MBSFN area can use the same MBSFN reference signals or different MBSFN reference signals.

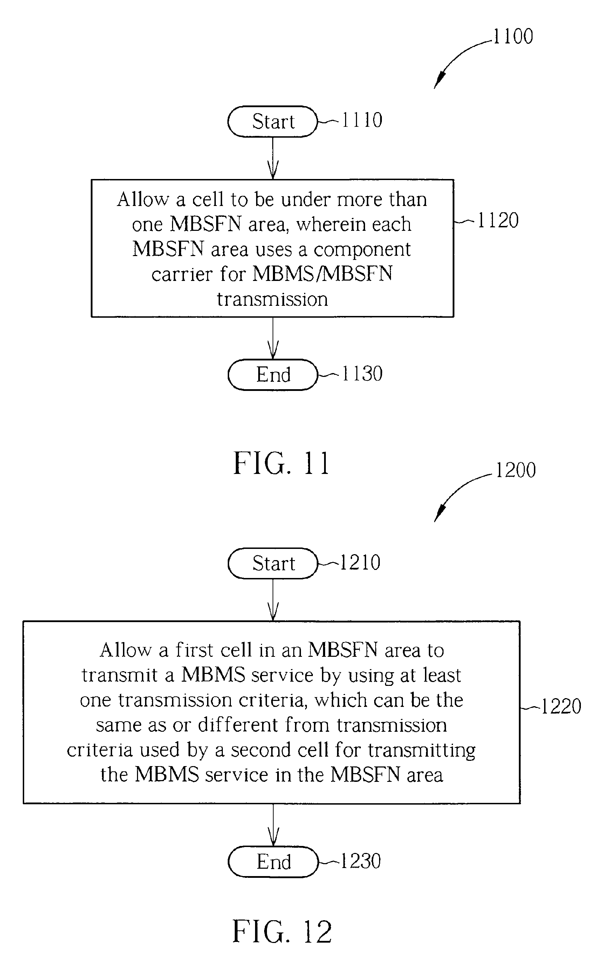

FIG. 11 is a flowchart illustrating a process 1100 for realizing MBMS according to an eleventh embodiment of the present invention as a second solution for issue 4. The steps are described as follows.

Step 1110: Start;

Step 1120: A cell is under more than one MBSFN area, wherein each MBSFN area uses a component carrier for MBMS/MBSFN transmission;

Step 1130: End.

In the process 1100, the cell can be under, for example, two MBSFN areas, and these two MBSFN areas can use the same component carrier (e.g. shared by scheduling) or different component carriers for MBMS/MBSFN transmission, and both of the MBSFN areas can use the same MBSFN reference signal or different MBSFN reference signals in the cell, wherein the usage of the MBSFN reference signal is decided according to component carrier and/or MBSFN area ID and/or cell ID and/or UE (e.g. by UE specific reference signal) and/or channel condition (e.g. measurement report) and/or CFI value (e.g. control format indicator) and/or MBSFN subframe. In advance for the reception of MBMS/MBSFN transmission, the UE derives resource/patterns/densities of MBSFN reference signals by itself according to at least one of the component carrier, the MBSFN area ID, the cell ID, the UE ID, the channel condition, the CFI value, and the MBSFN subframe, and thus the UE knows different MBSFN reference signals (e.g. patterns or densities). To know different MBSFN reference signals in advance, the UE should have been configured with the MBSFN reference signals/MBSFN reference signal patterns/MBSFN reference signal densities through higher layer signaling.

FIG. 12 is a flowchart illustrating a process 1200 for realizing MBMS according to a twelfth embodiment of the present invention as a third solution for issue 4. The steps are described as follows.

Step 1210: Start;

Step 1220: A first cell in an MBSFN area transmits a MBMS service by using at least one transmission criteria, which can be the same as or different from transmission criteria used by a second cell for transmitting the MBMS service in the MBSFN area;

Step 1230: End.

In the process 1200, the MBMS service can be transmitted, for example, by MCCH, MTCH, MCH, or PDSCH, and the transmission criteria can be, for example, MCS, transmission resources, modulation scheme, coding scheme, transmission scheme/mode (e.g. MIMO), transmission power, and/or radio resources.

In the first cell, a UE can receive the MBMS service by choosing/detecting/expecting/being configured with/assuming at least one of the said at least one transmission criteria according to certain condition(s). The certain condtion can be the received signal to noise ratio (SNR) of the UE, power of the received reference signal, the received interference level, the channel condition, the UE capability, the UE location, or the service application. The transmission criteria is detected by UE itself or indicated by the first cell through MCCH and/or MSAP and/or DSI.

Furthermore, the first cell chooses/determines/configures at least one transmission criteria according to channel condition, service QoS, transmission limitation (e.g. transmission power), power limitation, uplink feedback, uplink reference signal (e.g. frequency selective scheduling), MU-MIMO channel matrix, and/or randomization technique. The radio resource(s) and/or patterns of uplink reference signal is configured by the network (e.g. the first cell) or derived by the UE according to the received MBMS service, the downlink channel, the UE identity, the cell identity, the grouping identity, or the MBSFN area identity. The radio resource(s) consists of OFDM symbol(s) and subcarrier(s). The UE transmits uplink reference signal in a specific OFDM symbol or time slot.

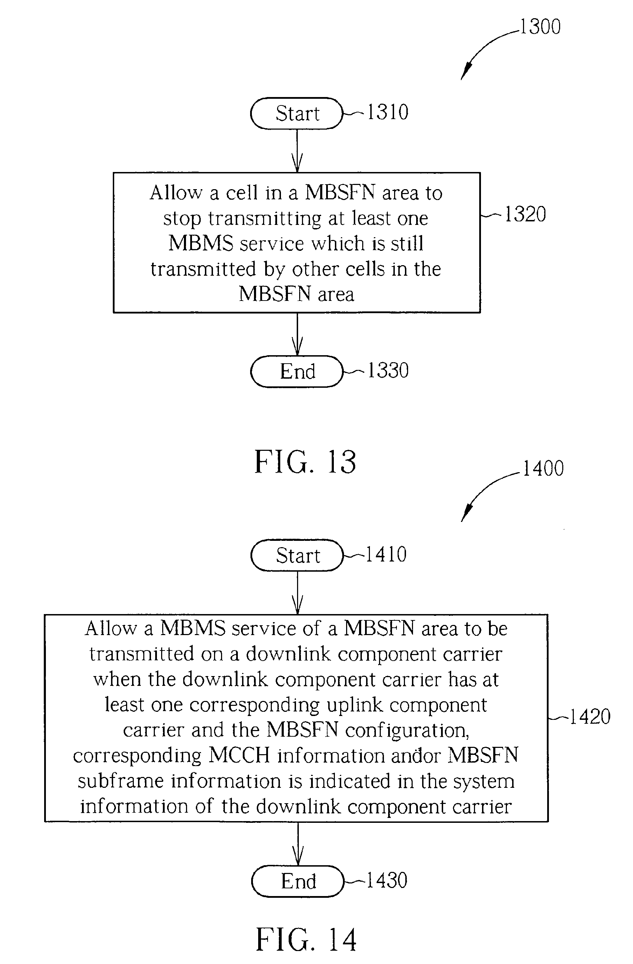

FIG. 13 is a flowchart illustrating a process 1300 for realizing MBMS according to a thirteenth embodiment of the present invention as a fourth solution for issue 4. The steps are described as follows.

Step 1310: Start;

Step 1320: A cell in a MBSFN area stops transmitting at least one MBMS service which is still transmitted by another cell or other cells in the MBSFN area;

Step 1330: End.

In the process 1300, the cell decides not to transmit the said at least one MBMS service according to cell location, time duration, number of UE receiving the said at least one MBMS service, channel measurement, or because of providing another MBMS service, or OAM purpose. The cell still transmits MBSFN reference signal when at least one MBMS service is stopped, or, alternatively, stops transmitting MBSFN reference signal when at least one MBMS service is stopped.

FIG. 14 is a flowchart illustrating a process 1400 for realizing MBMS according to a fourteenth embodiment of the present invention as a first solution for issue 5. The steps are described as follows.

Step 1410: Start;

Step 1420: An MBMS service of a MBSFN area is transmitted on a downlink component carrier when the downlink component carrier has at least one corresponding uplink component carrier and the MBSFN configuration, corresponding MCCH information and/or MBSFN subframe information is indicated in the system information of the downlink component carrier;

Step 1430: End.

In the process 1400, the MBMS service can be, for example, by MCCH, MTCH, MCH, or PDSCH, and the downlink component carrier including the system information can be, for example, a primary component carrier.

However, if an extension carrier, carrier segment, a downlink component carrier does not include system information transmission, or a downlink component does not have a corresponding uplink component carrier, the MBMS service of the MBSFN area is not transmitted.

Alternatively, if an extension carrier (e.g. carrier aggregation), carrier segment, a downlink component carrier does not include system information transmission, or a downlink component does not have a corresponding uplink component carrier, the MBMS service of the MBSFN area can be still transmitted.

In the process 1400, the system information of a first downlink component carrier (e.g. primary downlink carrier) indicates at least one of information of MBSFN configuration on the first downlink component carrier, cross-carrier information of MBSFN configuration, MCS (modulation and coding schemes) of MCCH, MCCH information and/or MBSFN subframe information of a second downlink component carrier (e.g. extension carrier, a downlink component carrier without system information transmission, or a downlink component carrier without corresponding uplink component carrier).

Furthermore, an MCCH can indicate information of one or more MBSFN areas which provide MBMS service on at least one downlink component carrier or different downlink component carriers, and the information includes MBSFN subframe configuration, service ID /list, MCS of MCH(s), MSAP or DSI. The system information or MCCH includes carrier indication field to indicate information on different carriers (e.g. from the carriers transmitting system information or MCCH).

When the radio link failure of the first downlink component carrier or the downlink component carrier with system information is detected, a UE (e.g. receiving MBMS services on the second downlink component carrier or the corresponding downlink component carrier without system information) stops receiving MBMS service on the second downlink component carrier or the corresponding downlink component carrier without system information (e.g. not stand alone carrier).

In the process 1400, a UE reads system information for MCCH transmission information and/or MCCH on a DL component carrier only if the UE is configured with the downlink component carrier. Or, a UE reads/detects/receives MCCH on a downlink component carrier without system information transmission only if the UE is configured with the downlink component carrier.

Additionally, the system information on a (stand-alone) downlink component carrier can indicate cross carrier MCCH information on another (non-stand-alone) downlink component carrier.

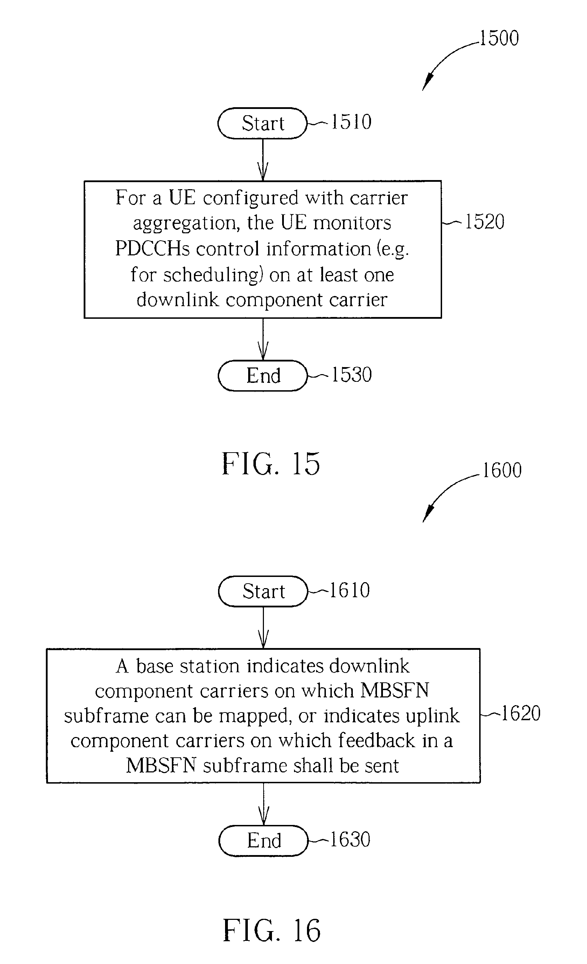

FIG. 15 is a flowchart illustrating a process 1500 for realizing MBMS according to a fifteenth embodiment of the present invention as a second solution for issue 5. The steps are described as follows.

Step 1510: Start;

Step 1520: For a UE configured with carrier aggregation, the UE monitors PDCCHs control information (e.g. for scheduling) on at least one downlink component carrier;

Step 1530: End.

In the process 1500, the carrier aggregation can be uplink/downlink symmetric or asymmetric, the UE monitors control information in the PDCCH, for example, for scheduling. The PDCCHs on a first downlink component carrier of the carrier aggregation can perform cross-carrier scheduling to the UE by using carrier indication field and/or scheduling information to indicate the PDSCH/PUSCH scheduling on a second downlink or uplink component carrier. The first downlink component carrier transmits MBMS services for a first MBSFN area, the second downlink component carrier transmits MBMS services for a second MBSFN area. The PDCCH on the first downlink component carrier can schedule PDSCH transmission in a first MBSFN subframe of the first MBSFN area, and the first MBSFN subframe only transmits PDSCH, e.g. no MCH transmission. Or, the PDCCH on the first downlink component carrier can schedule PDSCH transmission in a second MBSFN subframe of the second MBSFN area, and the second MBSFN subframe transmits PDSCH and/or MCH.

FIG. 16 is a flowchart illustrating a process 1600 for realizing MBMS according to a sixteenth embodiment of the present invention as a third solution for issue 5. The steps are described as follows.

Step 1610: Start;

Step 1620: A base station indicates downlink component carriers on which MBSFN subframe can be mapped, or indicates uplink component carriers on which feedback in a MBSFN subframe shall be sent;

Step 1630: End.

In the process 1600, the base station includes a cell having component carriers to provide MBMS service. The base station indicates, for example, all or part of the downlink component carriers which MBSFN subframes can be mapped on with PDSCH transmissions scheduled by PDCCHs. Or, The base station indicates, for example, all or part of the uplink component carriers on which feedback of either PDSCH or PMCH reception in a MBSFN subframe shall be sent.

The PDCCH can be on a component carrier the same as or different from the component carrier on which PDSCH is transmitted in the MBSFN subframe and is addressed to a UE, which may or may not receive MBMS service.

In addition, the MBSFN subframe is not scheduled on a component carrier dedicated to MBSFN service.

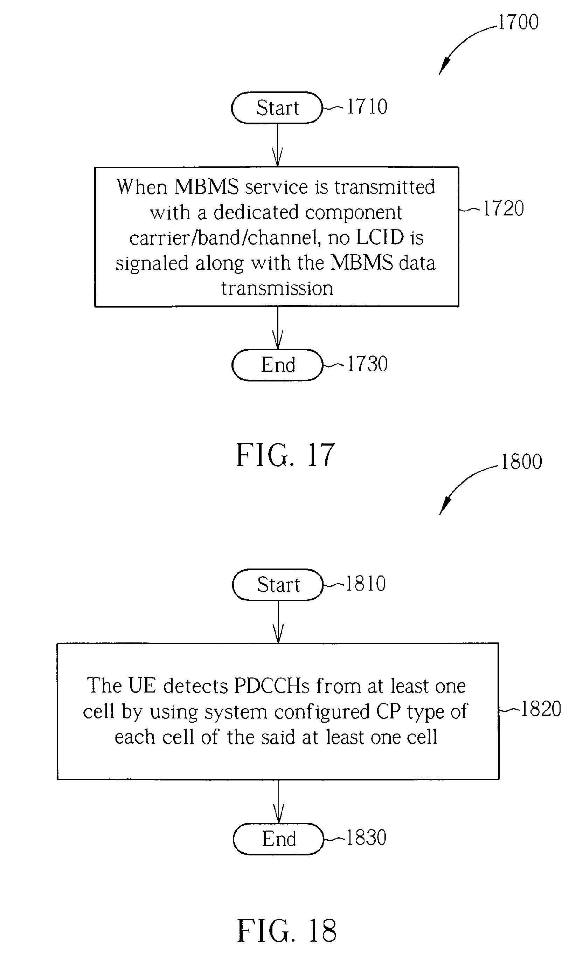

FIG. 17 is a flowchart illustrating a process 1700 for realizing MBMS according to a seventeenth embodiment of the present invention as a first solution for issue 6. The steps are described as follows.

Step 1710: Start;

Step 1720: When MBMS service is transmitted with a dedicated component carrier/band/channel, no LCID is signaled along with the MBMS data transmission;

Step 1730: End.

In the process 1700, there is no system information on the dedicated component carrier/band/channel, and the MCCH transmission information can be indicated by system information in another component carrier/band/channel, or in a component/band/channel different from the dedicated component carrier/band/channel. In this way, a UE does not expect PDCCH (e.g. on another carrier) cross carrier scheduling of PDSCH on the dedicated component carner/band/channel. Furthermore, the UE also does not expect MSAP (MBSFN subframe allocation pattern) on MCCH on the dedicated component carrier/band/channel. The dynamic scheduling information (DSI) is transmitted on the first subframe of a radio frame of system frame number (SFN) and appears periodically (e.g. in next periodic SFN).

FIG. 18 is a flowchart illustrating a process 1800 for realizing MBMS according to an eighteenth embodiment of the present invention as a second solution for issue 6. The steps are described as follows.

Step 1810: Start;

Step 1820: A UE detects PDCCHs from at least one cell by using system configured CP type of each cell of the said at least one cell;

Step 1830: End.

In the process 1800, the UE is configured with CoMP operation. The said at least one cell can be, for example, a serving cell. The system configured cyclic prefix (CP) type can be, for example, in the control region. The UE decodes PDSCHs scheduled by the said PDCCHs from at least one cell by using extended CP type (e.g. in data region). The PDCCH and/or PDSCH are transmitted on at least one component carrier. Different cells can have different system configured CP types (e.g. normal CP and extended CP). The CoMP transmission(s) can be signalled in at least one MBSFN subframe. The PDSCHs in the MBSFN subframe are transmitted with MBSFN reference signal and/or demodulation signal.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for realizing MBMS under bandwidth aggregation, comprising:
a UE in a cell within at least one MBSFN area expecting at least one or different MBSFN reference signals from at least one or different transmission points or cells for MBMS or MBSFN transmission from the same MBSFN area or different MBSFN areas.

2. The method of claim 1, wherein at least one of pattern and density of the at least one or different MBSFN reference signals are configured by higher layer; or
wherein at least one of pattern and density of the at least one or different MBSFN reference signals are derived by the UE according to at least one of component carrier, MBSFN area identity, cell identity, UE identity, channel condition, Control format indicator (CFI) value, and MBSFN subframe.

3. The method of claim 1, wherein the UE performs measurement before receiving data in an MBSFN subframe, and wherein the data in the MBSFN subframe is MBMS data for MBMS service or UE data for data service.

4. The method of claim 1, wherein different MBSFN reference signals are sent on a same component carrier or frequency band or different component carriers or frequency bands; or wherein the same MBSFN area or each of the different MBSFN areas use the same MBSFN reference signal or different MBSFN reference signals in the cell.

5. A method realizing MBMS under bandwidth aggregation, comprising:
a cell in an MBSFN area stopping transmitting at least one MBMS service which is transmitted by another cell or other cells in the MBSFN area.

6. The method of claim 5, wherein the cell decides not to transmit the at least one MBMS service according to cell location, time duration, number of UE receiving the at least one MBMS service, or channel measurement, or because of providing another MBMS service or OAM purpose.

7. The method of claim 5, wherein the cell transmits at least one MBSFN reference signal when the at least one MBMS service is stopped.

8. The method of claim 5, wherein the cell stops transmitting an MBSFN reference signal when the at least one MBMS service is stopped.

9. A method for realizing MBMS under bandwidth aggregation, comprising:
when MBMS service is transmitted with a dedicated component carrier, band or channel, no LCID being signaled along with the MBMS data transmission.

10. The method of claim 9, wherein there is no system information on the dedicated component carrier, band or channel; and
wherein the MCCH transmission information is indicated by system information in another component carrier, band or channel or in a component carrier, band or channel different from the dedicated carrier, band or channel.

11. The method of claim 9, wherein a UE does not expect PDCCH cross carrier scheduling of PDSCH on the dedicated component carrier, band or channel.

12. The method of claim 9, wherein a UE does not expect MBSFN subframe allocation pattern (MSAP) on MCCH on the dedicated component carrier, band or channel; and
wherein the dynamic scheduling information (DSI) is transmitted on the first subframe of a radio frame of system frame number (SFN), and appears periodically.

13. A method for realizing MBMS under CoMP operation, comprising:
for a UE configured with CoMP operation, the UE detecting at least one PDCCH from at least one cell by using system configured cyclic prefix (CP) type of each cell of the at least one cell.

14. The method of claim 13, wherein the UE decodes the at least one PDSCH scheduled by the at least one PDCCH from the at least one cell by using extended CP type; and
wherein the at least one PDCCH and the at least one PDSCH are transmitted on at least one component carrier.

15. The method of claim 13, wherein each of the at least one cell has own system configured CP type or different cells have different system configured CP types; or
wherein at least one PDSCH transmission of CoMP is signaled in at least one MBSFN subframe, and the at least one PDSCH in the at least one MBSFN subframe is transmitted with at least one of MBSFN reference signal and demodulation signal.
